# EUROPÄISCHE PATENTANMELDUNG

(11) **EP 2 993 748 A1**
(43) Veröffentlichungstag der Anmeldung: **09.03.2016**
(21) Anmeldenummer: 14183558.7
(22) Anmeldetag: 04.09.2014
(51) Int. Cl.: H02G 3/04, B60L 11/18

(54) **Ladesäule für elektrisch betriebene Fahrzeuge**

(71) Anmelder: Heberger GmbH, 67105 Schifferstadt (DE)
(72) Erfinder: Lelle, Gregor, 67373 Dudenhofen (DE)
(74) Vertreter: Baier, Martin

(57) **Zusammenfassung**

Die vorliegende Erfindung betrifft eine Ladesäule (1) für elektrisch betriebene Fahrzeuge, umfassend
- ein Fundament (3),
- einen auf dem Fundament (3) angeordneten säulenförmigen Grundkörper (5), der in seinem Inneren zumindest teilweise einen Hohlraum (7) aufweist,
- zumindest eine Stromzuleitung (9), die in dem Hohlraum (7) vorgesehen ist,
- zumindest eine erste Öffnung (11a) in dem säulenförmigen Grundkörper (5), in der zumindest ein Stromanschluss (13) für elektrisch betriebene Fahrzeuge und ein Bedienfeld (15) aufgenommen sind,

wobei zumindest der säulenförmige Grundkörper (5) im Wesentlichen aus Beton besteht.

## Beschreibung

Die vorliegende Erfindung betrifft eine Ladesäule für elektrisch betriebene Fahrzeuge.

Ladesäulen für elektrisch betriebene Fahrzeuge, insbesondere für elektrisch betriebene PKW, sind aus dem Stand der Technik prinzipiell bekannt. Hierbei wird zwischen einer drahtgebundenen und einer drahtlosen Energieübertragung unterschieden. Bei der drahtlosen Energieübertragung erfolgt das Laden induktiv, meist über eine im Boden vorgesehene Magnetspule, über der das Fahrzeug abgestellt wird. Bei der drahtgebundenen Energieübertragung wird hingegen ein Ladekabel mit einer entsprechenden Steckverbindung mit dem elektrisch betriebenen Fahrzeug verbunden. Die drahtgebundenen Ladestationen werden noch einmal nach Gleichstrom und Wechselstrom unterschieden, wobei das Laden mit Gleichstrom in der Regel kürzere Ladezeiten ermöglicht, da die erforderlichen Umrichter von Wechselstrom auf Gleichstrom in einer leistungsstarken Ausführung in der Ladestation vorgesehen sind.

In DE 10 2013 203634 A1 wird eine Ladesäule zum Anschließen von Elektrofahrzeugen an eine Stromversorgung vorgeschlagen. Ein bestehendes Stromnetz weist dabei ein Anschlusselement zum Ausgeben elektrischer Energie an ein Elektrofahrzeug auf. Die Ladesäule selbst wird auf eine Stromschiene der Stromversorgung aufgesteckt und besteht im Prinzip aus U-förmigen Trägern aus Aluminiumprofilen, auf welche entsprechende Front- und Rückenplatten angebracht werden. Diese Lösung eignet sich insbesondere zum Nachrüsten von bestehenden Stellplätzen, beispielsweise in Parkhäusern, in denen bereits eine Infrastruktur an Stromversorgung vorhanden ist.

DE 10 2013 008592 A1 schlägt eine Ladesäule vor, die ein Gehäuse aus einem Mehrschichtleichtbauteil aufweist, insbesondere aus einer tiefgezogenen Kunststofffolie, die von einer Schicht aus einer ausgehärteten Schaummasse gestützt wird. Damit sollen die aus dem Stand der Technik bekannten Metallgehäuse ersetzt werden, was neben der Leichtbauweise Vorteile bei der Herstellung, Montage, Konzeption und Konstruktion aufweisen soll.

Ladesäulen aus dem Stand der Technik weisen allgemein das Problem auf, dass sie frei zugänglich im mehr oder weniger öffentlichen Raum aufgestellt sind. Damit sind sie leider häufig Ziele von Vandalismus und bieten aufgrund ihrer Konstruktion aus Metallen oder Kunststoffen keine ausreichende Stabilität. Neben dem Vandalismus können die beschriebenen Ladesäulen aber auch durch unachtsame Kraftfahrer beschädigt werden, die beispielsweise auf einem Parkplatz mit einer Ladesäule kollidieren. Zudem werden moderne Ladesäulen häufig als störend im Stadtbild empfunden.

Um die genannten Nachteile zu überwinden, schlägt WO 2012/104231 A2 eine Ladestation zum Aufladen eines Elektrofahrzeugs mit einer Ladesäule vor. Die Ladesäule ist dabei mit Hilfe einer Hebevorrichtung versenkbar, so dass sie weder ein physikalisches Hindernis noch eine optische Beeinträchtigung der Umgebung darstellt und nicht durch äußere Einflüsse zu beschädigen ist. Obwohl diese Lösung einen wirksamen Schutz vor Vandalismus und anderen Beschädigungen zu bieten scheint, ist die Umsetzung mit einer unterirdischen Anordnung der versenkbaren Ladesäule sowie der entsprechenden Versorgungseinrichtungen sehr aufwändig und damit extrem teuer. Eine solche Lösung bietet sich daher nur in Einzelfällen in einer Umgebung an, in der die Kosten zweitrangig sind. Für eine allgemeine Verwendung im öffentlichen Raum kommt diese Lösung nicht in Frage.

Es ist daher die Aufgabe der vorliegenden Erfindung, eine Ladesäule bereitzustellen, welche die vorstehend genannten Nachteile überwindet und insbesondere eine kostengünstige und stabile sowie gegen Beschädigungen widerstandsfähige Lösung bietet.

Diese Aufgabe wird in einem ersten Aspekt der vorliegenden Erfindung durch eine Ladesäule (1) für elektrisch betriebene Fahrzeuge gelöst, umfassend
- ein Fundament (3),
- einen auf dem Fundament (3) angeordneten säulenförmigen Grundkörper (5), der in seinem Inneren zumindest teilweise einen Hohlraum (7) aufweist,
- zumindest eine Stromzuleitung (9), die in dem Hohlraum (7) vorgesehen ist,
- zumindest eine erste Öffnung (11a) in dem säulenförmigen Grundkörper (5), in der zumindest ein Stromanschluss (13) für elektrisch betriebene Fahrzeuge und ein Bedienfeld (15) aufgenommen sind,
wobei zumindest der säulenförmige Grundkörper (5) im Wesentlichen aus Beton besteht.

Die erfindungsgemäße Ladesäule (1) verbindet die Kostenvorteile von Beton mit dessen mechanischer Stabilität zu einer vorteilhaften Lösung, die sowohl kostengünstig in der Herstellung und Aufstellung ist, als auch ausreichende Beständigkeit gegen Beschädigungen bietet.

Im Nachfolgenden wird die Erfindung im Detail beschrieben.

Die Erfindung umfasst eine Ladesäule (1) für elektrisch betriebene Fahrzeuge. Die Ladesäule (1) umfasst ein Fundament (3) und einen auf dem Fundament (3) vorgesehenen säulenförmigen Grundkörper (5), der in seinem Inneren zumindest teilweise einen Hohlraum (7) aufweist. In dem Hohlraum (7) ist zumindest eine Stromzuleitung (9) vorgesehen. In dem säulenförmigen Grundkörper (5) ist zudem eine erste Öffnung (11a) angeordnet, in der zumindest ein Stromanschluss (13) für elektrisch betriebene Fahrzeuge und ein Bedienfeld (15) aufgenommen sind. Die Ladesäule (1) zeichnet sich dadurch aus, dass zumindest der säulenförmige Grundkörper (5) im Wesentlichen aus Beton besteht.

Beton ist ein vielseitiger Werkstoff, der sich kostengünstig verarbeiten und in Form geben lässt. Beton weist darüber hinaus (abhängig von seiner Zusammensetzung) eine hohe mechanische Stabilität auf. In der vorliegenden Erfindung ist es daher möglich, eine Ladesäule (1) für elektrisch betriebene Fahrzeuge bereitzustellen, deren säulenförmiger Grundkörper (5) aus Beton besteht und damit einerseits kostengünstig herstellbar und andererseits mechanisch stabil ist.

Aus dem Stand der Technik sind Ladesäulen bekannt, die aus lackiertem oder beschichtetem Metall bzw. aus Kunststoff gefertigt sind. Gerade im öffentlichen bzw. halböffentlichen Bereich werden solche Ladesäulen architektonisch eher als Fremdkörper angesehen. Insbesondere bei einem historischen Stadtbild können diese konventionellen Ladesäulen als sehr störend empfunden werden.

Demgegenüber ist der erfindungsgemäß verwendete Beton im öffentlichen Bereich sowie im Bereich von Gebäuden und Außenanlagen seit vielen Jahren grundsätzlich als Werkstoff bekannt und wird vielseitig verbaut. Die erfindungsgemäße Ladesäule (1) aus Beton fügt sich daher architektonisch besser in das Gesamtbild ein, insbesondere da sie je nach vorgesehenem Aufstellungsort in unterschiedlicher Form ausgeführt werden kann. Ein weiterer Vorteil der erfindungsgemäßen Ladesäule (1) ist, dass Beton als Werkstoff "mit Würde altert" und im Laufe der Zeit eine Patina erhält, die sich nicht von seiner Umgebung unterscheidet.

Die konventionellen Ladesäulen aus Metallen oder Kunststoffen sind vor allem recht empfindlich gegen Kratzer, Dellen und weiteren Beschädigungen und können daher bereits nach kurzer Zeit im öffentlichen bzw. halböffentlichen Bereich eher schäbig aussehen. Sind diese konventionellen Ladesäulen stark beschädigt, ergibt sich darüber hinaus ein ernsthaftes Sicherheitsproblem, da die stromführenden Leitungen in der Regel unter einer Spannung von 380 V stehen und im Schadensfall mit dem Metallgehäuse in Kontakt kommen oder aus einem beschädigten Kunststoffgehäuse hervortreten können. Bei der erfindungsgemäßen Ladesäule (1) aus Beton treten diese Nachteile nicht auf, vielmehr schafft der Beton eine bessere elektrische Isolierung. Unter einem "säulenförmigen Grundkörper" wird der Teil der Ladesäule verstanden, der oberirdisch im öffentlichen Raum angeordnet ist. Je nach örtlicher Gegebenheit kann der säulenförmige Grundkörper (5) unterschiedlich ausgestaltet sein. Aufgrund der Fertigungsweise aus Beton bestehen für seine äußere Form nur wenige Einschränkungen, so dass je nach Aufstellungsort in der Formgebung auf das Umfeld und das Stadtbild eingegangen werden kann. So ist es möglich, in einem industriellen Umfeld einfache und geradlinige Ladesäulen (1) herzustellen, während beispielsweise in einer Altstadt eine eher historisierende Form realisiert werden kann.

Sinnvollerweise ist der säulenförmige Grundkörper (5) im Inneren hohl, das heißt, er weist zumindest teilweise einen Hohlraum (7) auf. In diesem Hohlraum (7) ist mindestens eine Stromzuleitung (9) vorgesehen, die unterirdisch der Ladesäule (1) zugeführt wird. Der Hohlraum (7) kann ferner notwendige elektrotechnische Einrichtungen aufweisen, beispielsweise Gleichrichter oder dergleichen. Die zumindest erste Öffnung (11 a) kann bereits bei der Herstellung des säulenförmigen Grundkörpers (5) vorgesehen werden, aber auch nachträglich (mit etwas höherem Aufwand) in den säulenförmigen Grundkörper (5) eingebracht werden. Die Öffnung (11a) dient hauptsächlich dazu, einen Stromanschluss (13) für elektrisch betriebene Fahrzeuge aufzunehmen, insbesondere ein Ladekabel mit einem Stecker. Darüber hinaus wird ein Bedienfeld (15) aufgenommen, über welches sich der Nutzer der Ladesäule (1) beispielsweise autorisieren und den Ladevorgang starten und anhalten sowie weitere Einstellungen vornehmen kann.

Es ist ferner bei der erfindungsgemäßen Ladesäule (1) vorgesehen, dass in der Öffnung (11a) der Stromanschluss (13) und/oder das Bedienfeld (15) zurück versetzt angeordnet sind, so dass keine Teile über die Außenkontur der erfindungsgemäßen Ladesäule (1) hinausstehen. Diese Maßnahme schützt zusätzlich vor Beschädigungen und verhindert Verletzungen von Personen durch Anstoßen oder Hängenbleiben.

Ein weiterer Nachteil der konventionellen Ladesäulen aus Metall oder Kunststoffen besteht in deren thermischen Management. Insbesondere Metalle heizen sich beispielsweise bei Sonneneinstrahlung stark auf. Um einen wirksamen Schutz zu bieten, kann es vorkommen, dass die elektrische Anlage, die mit einer Spannung von in der Regel 380 V betrieben wird, automatisch abschaltet.

In einer bevorzugten Ausführungsform der Ladesäule (1) bestehen das Fundament (3) und der säulenförmige Grundkörper (5) im Wesentlichen aus Beton. Das Fundament (3) kann dabei ein Ortbeton-Fundament sein.

Gegenüber dem Stand der Technik wirkt die gesamte erfindungsgemäße Ladesäule (1) wie eine Kühlrippe. Zum einen wärmt sich Beton bei Sonneneinstrahlung nicht in der Weise auf wie Metall, zum anderen bewirkt die Ausführung der erfindungsgemäßen Ladesäule (1), dass Wärme in den Boden abgeführt wird. Folglich bietet die erfindungsgemäße Ladesäule (1) ein sehr gutes thermisches Management. Über das Fundament (3) kann die erfindungsgemäße Ladesäule (1) automatisch gekühlt werden. Über Nacht kann sich die erfindungsgemäße Ladesäule (1) darüber hinaus gut abkühlen und diese Abkühlung deutlich länger speichern als Metall oder Ku nststoffwerkstoffe.

Die Formulierung "besteht im Wesentlichen aus Beton" bedeutet im Sinne der vorliegenden Erfindung, dass der säulenförmige Grundkörper (5) und/oder das Fundament (3) ein Betonbauteil ist, das jedoch beispielsweise Verstärkungsmaterialien aufweisen kann, so dass der säulenförmige Grundkörper (5) und/oder das Fundament (3) nicht zu 100 % aus Beton bestehen. Mögliche Verstärkungsmaterialien sind Stahl oder Drahteinlagen sowie Fasern oder Füllstoffe.

In einer speziellen Ausführungsform der Erfindung weist/weisen der säulenförmige Grundkörper (5) und/oder das Fundament (3) 95 % bis 100 % Beton und 0 % bis 5 % Verstärkungsmaterial auf.

Es ist besonders bevorzugt, wenn das Fundament (3) und der säulenförmige Grundkörper (5) der erfindungsgemäßen Ladesäule (1) zweiteilig ausgebildet sind. Die Ladesäule (1) kann in gut transportablen Teilen in einer Fabrik vorgefertigt und am vorgesehenen Ort zusammengesetzt und aufgestellt werden. Da beim Aufstellen im öffentlichen Raum umfangreiche Absperrungs- und Sicherungsmaßnahmen notwendig sind, besteht ein berechtigtes Interesse daran, diese Maßnahmen zeitlich so weit wie möglich zu begrenzen. Da die erfindungsgemäße Ladesäule (1) im Wesentlichen nur aus zwei vorgefertigten Teilen besteht, verringert sich diese Maßnahme zeitlich deutlich. Sofern die unterirdische Stromzuleitung (9) bereits vorgesehen ist, kann das eigentliche Aufstellen beispielsweise innerhalb von drei bis vier Stunden erfolgen. Durch diese Weiterbildung ergibt sich ferner die Möglichkeit, beschädigte säulenförmige Grundkörper (5) einfach auszutauschen und das Fundament (3) einschließlich aller Anschlüsse an Ort und Stelle zu belassen.

Um im öffentlichen Raum ein ansprechendes Äußeres und eine möglichst unempfindliche Oberfläche zu bieten, hat es sich als vorteilhaft erwiesen, wenn in einer Weiterbildung der Erfindung der Beton Sichtbeton ist. Der Sichtbeton kann farblich durch eine Einfärbung des Betons bzw. durch eine Beton-Lasur eine weitere Anpassung an die Umgebung erfahren. Darüber hinaus ist es möglich, die Oberfläche weiter zu modifizieren. Die Oberfläche kann beispielsweise mit weiteren Materialien wie Klinkern, Riemchen, Fliesen oder Natursteinen belegt werden.

Darüber hinaus hat es sich in einer Ausführungsform der Ladesäule (1) für die mechanische Festigkeit als vorteilhaft erwiesen, wenn der Beton ein Faserbeton ist.

In einer Weiterbildung der Ladesäule (1) umfasst der säulenförmige Grundkörper (5) eine zweite Öffnung (11 b), die in dem säulenförmigen Grundkörper (5) gegenüber der ersten Öffnung (11a) vorgesehen ist und in der zumindest ein Stromanschluss (13) für elektrisch betriebene Fahrzeuge und ein Bedienfeld (15) aufgenommen sind. Mit dieser Ausführungsform wird der Notwendigkeit Rechnung getragen, die erfindungsgemäße Ladesäule (1) nicht nur für das Laden eines elektrisch betriebenen Fahrzeugs, sondern insbesondere für zwei elektrisch betriebene Fahrzeuge vorzusehen. Beispielsweise könnte auf einer Parkfläche die erfindungsgemäße Ladesäule (1) zwischen zwei einzelnen Parkplätzen aufgestellt sein.

Der zumindest eine Stromanschluss (13) kann für beide Öffnungen (11a, 11b) gemeinsam vorgesehen sein oder aber als getrennter Stromanschluss für jede Öffnung (11 a, 11 b) einzeln vorhanden sein.

In einer Ausführungsform ist das Fundament (3) der erfindungsgemäßen Ladesäule (1) mit seiner Oberseite im Bodenniveau (C) angeordnet. Das heißt, das Fundament (3) wird nur so weit in den Boden eingelassen, dass seine Oberkante mit dem Bodenniveau (C) abschließt. Dies hat den Vorteil, dass ein Austausch eines säulenförmigen Grundkörpers (5), bspw. nach einer Beschädigung, einfach erfolgen kann, ohne die Oberfläche wie Pflaster, Gehwegplatten oder eine Asphaltdecke anarbeiten zu müssen.

In einer alternativen Ausführungsform ist das Fundament (3) unter dem Bodenniveau (C) angeordnet, das heißt, seine Oberkante wird vom Bodenniveau (C) verdeckt und der säulenförmige Grundkörper (5) steht mit seinem unteren Teil im Boden. Hierdurch kann die Oberflächengestaltung des Bodenniveaus (C), z.B. eine Pflasterung oder eine Asphaltdecke, bis an den säulenförmigen Grundkörper (5) geführt werden.

Es hat sich als sinnvoll herausgestellt, wenn die erfindungsgemäße Ladesäule (1) zumindest einen Stromzähler für den zumindest einen Stromanschluss (13) aufweist. Im Gegensatz zu Lösungen aus dem Stand der Technik bietet die erfindungsgemäße Ladesäule (1) in dem Hohlraum (7) im säulenförmigen Grundkörper (5) die Möglichkeit, zumindest einen solchen Stromzähler unterzubringen.

Eine spezielle Ausführungsform der Ladesäule (1) sieht vor, dass der säulenförmige Grundkörper (5) eine Höhe von 80 bis 200, insbesondere von 160 cm über dem Bodenniveau (C) aufweist.

Ferner kann in einer Weiterbildung der erfindungsgemäßen Ladesäule (1) der säulenförmige Grundkörper (5) eine im Wesentlichen rechteckige Grundfläche mit einer Breite von 30 cm bis 80 cm, insbesondere von 50 cm, und einer Tiefe von 30 cm bis 80 cm, insbesondere von 40 cm aufweisen.

Je nach Anforderung und Umgebung sind jedoch auch runde oder mehreckige Grundflächen ohne Weiteres darstellbar, da, wie vorstehend bereits ausgeführt wurde, der Werkstoff Beton, aus dem zumindest der säulenförmige Grundkörper (5) im Wesentlichen besteht, eine große Freiheit in der Formgebung erlaubt.

Für die Stabilität des säulenförmigen Grundkörpers (5) der erfindungsgemäßen Ladesäule (1) hat es sich als vorteilhaft herausgestellt, wenn im Bereich des Hohlraums (7) dieser eine Wandstärke von 5 cm bis 15 cm, insbesondere von 10 cm aufweist.

Da der Werkstoff Beton zwar eine hervorragende mechanische Beständigkeit gegen Beschädigungen aufweist, jedoch auch gegen Vandalismus in Form von Beschmieren oder Besprühen geschützt werden soll, weist zumindest der säulenförmige Grundkörper (5) in einer vorteilhaften Ausführungsform eine funktionelle Oberflächenbeschichtung auf. Diese funktionelle Oberflächenbeschichtung kann insbesondere ein Anstrich mit einem so genannten Lotuseffekt sein. Ferner kann aus optischen Gründen eine Beton-Lasur aufgebracht werden. Eine weitere funktionelle Oberflächenbeschichtung stellt eine Graffiti-Schutzschicht dar, wodurch Graffiti bspw. mit Hilfe von Hochdruckstrahlern einfach entfernt werden können.

Um den zeitlichen und technischen Aufwand der Aufstellung der erfindungsgemäßen Ladesäule (1) am vorgesehenen Ort weiter zu verringern, ist es vorteilhaft, wenn in dem Fundament (3) ein durchgehender Hohlraum zur Aufnahme der zumindest einen Stromzuleitung (9) vorgesehen ist. Dieser durchgehende Hohlraum kann insbesondere ein Leerrohr sein. Beim Aufstellen muss daher lediglich die am vorgesehenen Ort bereitgestellte Stromzuleitung (9) durch den durchgehenden Hohlraum in den Hohlraum (7) eingezogen werden.

Weitere Ziele, Merkmale, Vorteile und Anwendungsmöglichkeiten ergeben sich aus der nachfolgenden Beschreibung von die Erfindung nicht einschränkenden Ausführungsbeispielen anhand der Figuren. Dabei bilden alle beschriebenen und/oder bildlich dargestellten Merkmale für sich oder in beliebiger Kombination den Gegenstand der Erfindung, auch unabhängig von ihrer Zusammenfassung in den Ansprüchen oder deren Rückbeziehung. Es zeigen:
- Fig. 1: eine schematische Teilansicht einer erfindungsgemäßen Ladesäule 1 nach einer Ausführungsform der Erfindung,
- Fig. 2: eine schematische Querschnittsansicht der in Figur 1 dargestellten erfindungsgemäßen Ladesäule 1,
- Fig. 3a: einen schematischen Querschnitt durch den säulenförmigen Grundkörper 5 entlang der Linie A - A aus Figur 2 und
- Fig. 3b: einen schematischen Querschnitt durch den säulenförmigen Grundkörper 5 entlang der Linie B - B aus Figur 2.

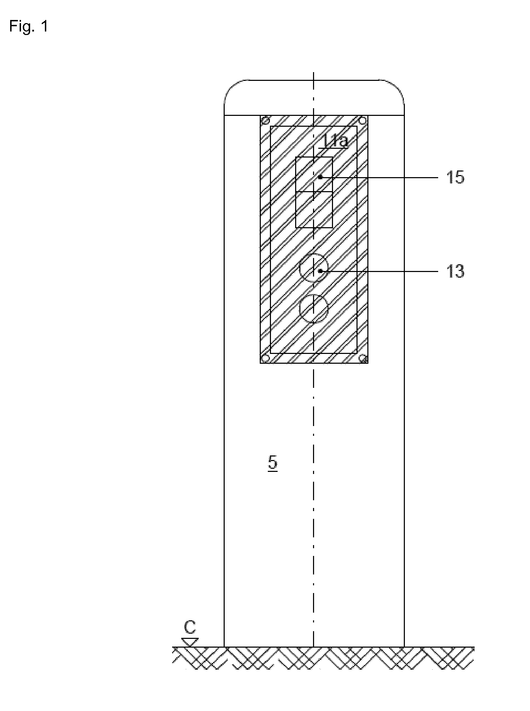

Figur 1 zeigt eine erfindungsgemäße Ladesäule 1 nach einer Ausführungsform der Erfindung, wobei nur die sichtbaren Teile, das heißt der säulenförmige Grundkörper 5 und die Öffnung 11a mit dem Stromanschluss 13 und dem Bedienfeld 15 zu sehen sind. Das Fundament 3 befindet sich unterhalb des Bodenniveaus C und der Hohlraum 7 sowie die Stromzuleitung 9 sind verdeckt. In allen Figuren sind Bemaßungen in Zentimetern einer bevorzugten Ausführungsform angegeben.

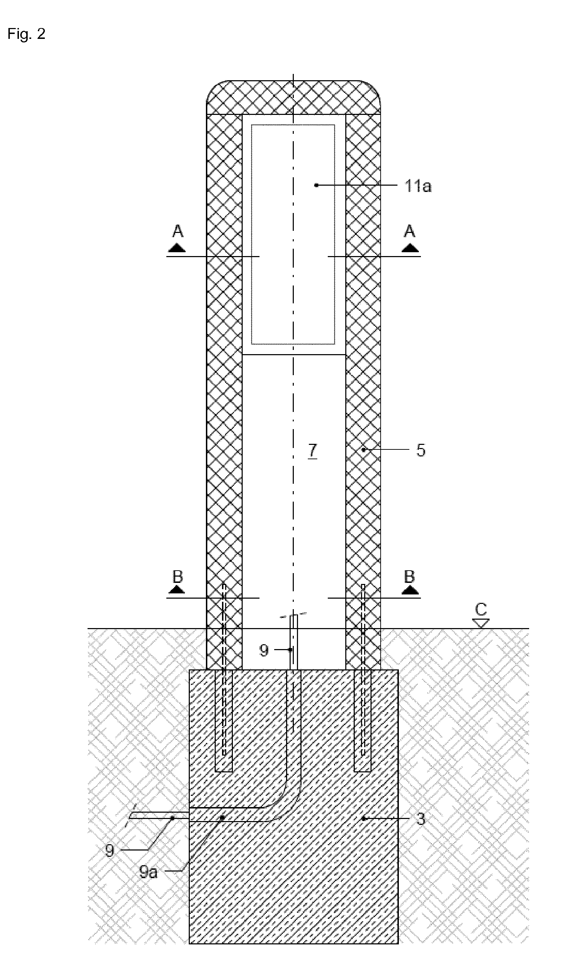

Figur 2 zeigt eine Querschnittsansicht der erfindungsgemäßen Ladesäule 1 in einer Ausführungsform der Erfindung. Das Fundament 3 ist dabei als Ortbeton-Fundament ausgeführt, das heißt, er wird für die Aufstellung der Ladesäule 1 vor Ort gegossen. In dieser Ausführungsform ist lediglich der säulenförmige Grundkörper 5 als Fertigteil aus Beton ausgeführt, das beim Aufstellen auf das Fundament 3 aufgesetzt und mit diesem in geeigneter Art und Weise verbunden wird. In dieser Ausführungsform kann die Stromzuleitung 9 entweder direkt in das Fundament 3 eingegossen werden, oder es wird im Fundament 3 ein Leerrohr 9a vorgesehen (das heißt ein durchgehender Hohlraum), durch welchen die Stromzuleitung 9 anschließend geführt wird. In der Darstellung der Figur 2 ist zu sehen, dass der säulenförmige Grundkörper ein Stück in den Boden hineinreicht.

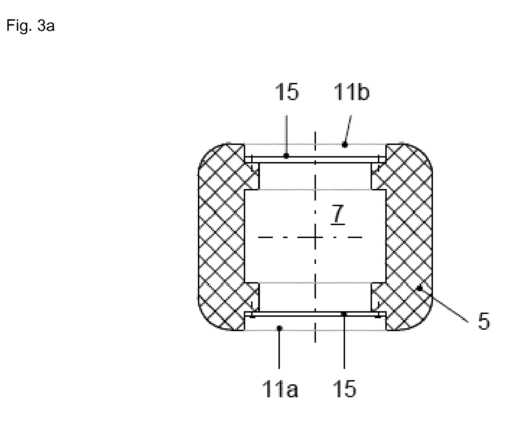

Figur 3a zeigt einen Querschnitt durch den säulenförmigen Grundkörper 5 entlang der Linie A - A. Gegenüberliegend sind die Öffnungen 11a und 11 b dargestellt, in denen hier lediglich die Bedienfelder 15 angedeutet sind. Wie vorstehend beschrieben, sind diese Bedienfelder von der Außenkontur des säulenförmigen Grundkörpers 5 zurück versetzt angeordnet.

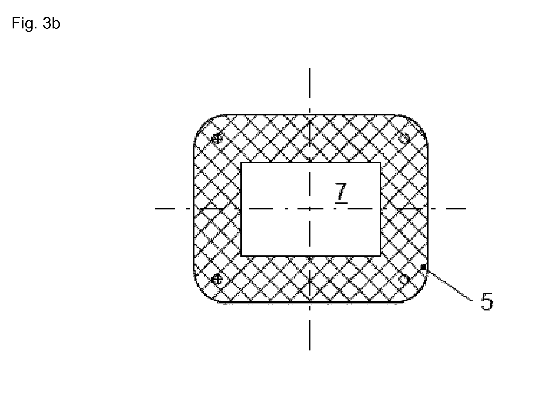

Figur 3b zeigt einen Querschnitt durch den säulenförmigen Grundkörper 5 entlang der Linie B - B. In dieser Darstellung sowie in den Figuren 2 und 3a hat der säulenförmige Grundkörper eine im Wesentlichen einheitliche Wandstärke von 10 cm. Abhängig von dem Aufstellungsort und der geometrischen Ausführung kann diese Wandstärke jedoch schwanken.

### Bezugszeichenliste

- 1: Ladesäule
- 3: Fundament
- 5: säulenförmiger Grundkörper
- 7: Hohlraum
- 9: Stromzuleitung
- 9a: Leerrohr
- 11a: Öffnung
- 11b: Öffnung
- 13: Stromanschluss
- 15: Bedienfeld
- C: Bodenniveau

## Patentansprüche

1. Ladesäule (1) für elektrisch betriebene Fahrzeuge, umfassend
- ein Fundament (3),
- einen auf dem Fundament (3) angeordneten säulenförmigen Grundkörper (5), der in seinem Inneren zumindest teilweise einen Hohlraum (7) aufweist,
- zumindest eine Stromzuleitung (9), die in dem Hohlraum (7) vorgesehen ist,
- zumindest eine erste Öffnung (11a) in dem säulenförmigen Grundkörper (5), in der zumindest ein Stromanschluss (13) für elektrisch betriebene Fahrzeuge und ein Bedienfeld (15) aufgenommen sind,
wobei zumindest der säulenförmige Grundkörper (5) im Wesentlichen aus Beton besteht.

2. Ladesäule (1) nach Anspruch 1, wobei das Fundament (3) und der säulenförmige Grundkörper (5) im Wesentlichen aus Beton bestehen.

3. Ladesäule (1) nach Anspruch 2, wobei das Fundament (3) und der säulenförmige Grundkörper (5) zweiteilig ausgebildet sind.

4. Ladesäule (1) nach einem der Ansprüche 1 bis 3, wobei der Beton Sichtbeton ist.

5. Ladesäule (1) nach einem der Ansprüche 1 bis 4, wobei der Beton Faserbeton ist.

6. Ladesäule (1) nach einem der Ansprüche 1 bis 5, ferner umfassend eine zweite Öffnung (11b), die in dem säulenförmigen Grundkörper (5) gegenüber der ersten Öffnung (11a) vorgesehen ist und in der zumindest ein Stromanschluss (13) für elektrisch betriebene Fahrzeuge und ein Bedienfeld (15) aufgenommen sind.

7. Ladesäule (1) nach einem der Ansprüche 1 bis 6, wobei das Fundament (3) mit seiner Oberseite im Bodenniveau (C) angeordnet ist.

8. Ladesäule (1) nach einem der Ansprüche 1 bis 6, wobei das Fundament (3) unter dem Bodenniveau (C) angeordnet ist.

9. Ladesäule (1) nach einem der Ansprüche 1 bis 8, ferner umfassend zumindest einen Stromzähler für den zumindest einen Stromanschluss (13).

10. Ladesäule (1) nach einem der Ansprüche 1 bis 9, wobei der säulenförmige Grundkörper (5) eine Höhe von 80 cm bis 200 cm, insbesondere von 160 cm über dem Bodenniveau (C), aufweist.

11. Ladesäule (1) nach einem der Ansprüche 1 bis 9, wobei der säulenförmige Grundkörper (5) eine im Wesentlichen rechteckige Grundfläche mit einer Breite von 30 cm bis 80 cm, insbesondere von 50 cm, und einer Tiefe von 30 cm bis 80 cm, insbesondere von 40 cm aufweist.

12. Ladesäule (1) nach einem der Ansprüche 1 bis 11, wobei der säulenförmigen Grundkörper (5) im Bereich des Hohlraums (7) eine Wandstärke von 5 cm bis 15 cm, insbesondere von 10 cm aufweist.

13. Ladesäule (1) nach einem der Ansprüche 1 bis 12, wobei zumindest der säulenförmige Grundkörper (5) eine funktionelle Oberflächenbeschichtung aufweist.

14. Ladesäule (1) nach einem der Ansprüche 1 bis 13, wobei in dem Fundament (3) ein durchgehender Hohlraum zur Aufnahme der zumindest einen Stromzuleitung (9) vorgesehen ist.
